# EUROPEAN PATENT APPLICATION

(11) **EP 4 843 804 A1**
(43) Date of publication of application: **25.11.2026**
(21) Application number: 25177304.0
(22) Date of filing: 19.05.2025
(51) Int. Cl.: B60K 1/04

(54) **BATTERY SUSPENSION WITH INTERMEDIATE BRACKET FOR CONNECTING TRACTION BATTERY MODULE**

(71) Applicant: Volvo Truck Corporation, 405 08 Göteborg (SE)
(72) Inventor: LANDVIK, Sondre, 417 61 GÖTEBORG (SE); NAWKHARE, Nilesh Ravindra, 418 42 GÖTEBORG (SE)
(74) Representative: Kransell & Wennborg KB

(57) **Abstract**

The present disclosure relates to a battery suspension arrangement for a traction battery assembly of a vehicle, the battery suspension arrangement comprising a laterally extending frame bracket configured to be mounted to a longitudinal vehicle frame member, the frame bracket comprising a first traction battery interface for suspending a first traction battery module positioned laterally outside the frame member, a laterally extending cross-member comprising a second traction battery interface for suspending a second traction battery module positioned laterally inside the frame member, and an intermediate bracket comprising a first portion connected to the frame bracket, and a second portion connected to the cross-member, wherein the cross-member is suspended from the frame bracket via the intermediate bracket.

## Description

### TECHNICAL FIELD

The disclosure relates generally to traction battery suspension. In particular aspects, the disclosure relates to a battery suspension with intermediate bracket for connecting a traction battery module. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

Battery electric vehicles (BEVs) require efficient and secure methods for mounting traction batteries to the vehicle frame. The design of such mounting systems must consider factors such as structural integrity, crash safety, ease of assembly, and maintainability. Existing solutions often involve complex installation processes that can impact production efficiency and serviceability. Additionally, ensuring proper load distribution and protection against vibrations and collisions is still a critical challenge in the development of battery suspension systems for heavy-duty electric vehicles.

### SUMMARY

According to a first aspect of the disclosure, there is provided a battery suspension arrangement for a traction battery assembly of a vehicle, the battery suspension arrangement comprising: a laterally extending frame bracket configured to be mounted to a longitudinal vehicle frame member, the frame bracket comprising a first traction battery interface for suspending a first traction battery module positioned laterally outside the frame member, a laterally extending cross-member comprising a second traction battery interface for suspending a second traction battery module positioned laterally inside the frame member, and an intermediate bracket comprising a first portion connected to the frame bracket, and a second portion connected to the cross-member, wherein the cross-member is suspended from the frame bracket via the intermediate bracket. The first aspect of the disclosure may seek to address the challenge of efficiently integrating multiple traction battery modules into a heavy-duty vehicle chassis, while maintaining efficient manufacturability, serviceability, durability, and safety. In particular, the inventors of the present disclosure have recognized the need for a suspension arrangement that enables a compact installation in the wheelbase area, including batteries located outside the frame rails as well as one or more additional batteries positioned under the frame, in order to increase the total installed energy and thereby extend vehicle driving range. Conventional installations may often involve direct mounting of battery support structures to the vehicle frame, which can limit modularity and complicate access to fasteners during assembly or service. This may be problematic in production environments, where the possibility of accessing bolts from underneath the vehicle may be restricted. Furthermore, service scenarios-especially in aftermarket workshops-may require quick and localized removal of battery modules without disconnecting surrounding structural components, and without requiring specialized tools or procedures. Additionally, the suspension arrangement should preferably tolerate frame twisting and longitudinal impact loads, which may be common in heavy-duty applications. Accordingly, the first aspect of the disclosure seeks to overcome these limitations by introducing an intermediate bracket configuration that supports the under-frame battery module, i.e. the second traction battery module, via a structural connection to the frame bracket that supports the outboard battery module, i.e. the first traction battery module. This arrangement may allow for dual-orientation fastener access, fulfilling the needs of both production and aftermarket operations. A technical benefit may include enabling the suspension of a second traction battery module under the vehicle frame via a bracket that is structurally connected to the frame bracket suspending the first traction battery module outside the frame, thereby reducing the number of direct interfaces with the vehicle frame. This may simplify the assembly process, improve accessibility for fastening operations, and support a more compact and modular battery installation, which may contribute to increased installed energy capacity and improved vehicle range.

The definition "laterally extending" should be construed to refer to a component or structure that extends in a direction transverse to the longitudinal direction of the vehicle frame. For a vehicle having a pair of longitudinal frame members extending in the front-to-rear direction, a laterally extending component spans from, across, or between the frame members in a crosswise, side-to-side direction. This may include, for example, brackets, beams, or cross-members that are oriented perpendicular or substantially perpendicular to the vehicle's longitudinal axis.

Optionally in some examples, including in at least one preferred example, the intermediate bracket comprises a frame bracket interface configured to be attached to the frame bracket, and a cross-member interface configured to be attached to the cross-member. A technical benefit may include providing distinct interface portions on the intermediate bracket for connection to the frame bracket and the cross-member, thereby enabling a modular attachment structure that can simplify installation and maintenance. In addition, the separation of the interface portions may improve flexibility and allow for more efficient use of available space within the vehicle chassis, which may contribute to a compact battery installation that in turn enables a higher installed energy density.

Also, and as defined above, each of the first and second portions of the intermediate bracket comprises an interface portion configured for mechanical attachment to the frame bracket and the cross-member, respectively. These interface portions may include one or more mounting flanges, bosses, or through-holes for receiving fasteners. In some examples, bolt-and-nut assemblies, thread-forming screws, or threaded inserts may be used to secure the intermediate bracket to the adjoining structural components. According to nonlimiting examples, guide features such as alignment pins or stepped mating surfaces may also be included to assist with positioning during assembly.

Optionally in some examples, including in at least one preferred example, the frame bracket interface comprises at least one laterally extending through hole through which a first fastener element is configured to secure the intermediate bracket to the frame bracket. A technical benefit may include enabling ergonomic and efficient attachment of the intermediate bracket to the frame bracket by providing laterally extending through holes that allow access from the side of the vehicle. The lateral orientation of the fastening interface may improve accessibility of a tool and may contribute to a streamlined installation process during vehicle assembly.

Optionally in some examples, including in at least one preferred example, the cross-member interface comprises at least one vertically extending through hole through which a second fastener element is configured to secure the intermediate bracket to the cross-member. A technical benefit may include enabling secure attachment of the intermediate bracket to the cross-member by providing a vertically extending through hole configured to receive a fastener from below. The vertical orientation may be well suited for e.g. service operations in aftermarket environments where access from above or underneath the vehicle is typically available.

Optionally in some examples, including in at least one preferred example, the frame bracket is a triangularly shaped frame bracket, the first portion of the intermediate bracket being connected to a lower portion of a vertical member of the triangularly shaped frame bracket. A technical benefit may include enabling a structurally favorable connection between the cross-member and the vehicle frame by attaching the intermediate bracket to a lower portion of a vertical member of a triangularly shaped frame bracket. The lower connection portion may allow the second traction battery module to be positioned below the first traction battery module, which can support a more compact vertical packaging and contribute to increased total installed battery volume. The lower connection portion may improve stability and load transfer during operation, including frame twisting or longitudinal impact.

Optionally in some examples, including in at least one preferred example, the battery suspension arrangement further comprises a pair of battery brackets connectable to the second traction battery module, the pair of battery brackets being suspended from the cross-member. A technical benefit may include simplified installation of the under-frame battery. The use of a pair of dedicated battery brackets may simplify attachment and removal of the battery module and enable preassembly as a sub-unit prior to installation on the vehicle.

Optionally in some examples, including in at least one preferred example, each bracket of the pair of brackets comprises an elongated portion, and the cross-member comprises a pair of apertures, the elongated portions being positioned within corresponding apertures of the cross-member. A technical benefit may include that a simple mechanical interface between the battery brackets and the cross-member can be provided by positioning elongated portions of the brackets within corresponding apertures in the cross-member. The engagement between the elongated portions and the corresponding apertures may support quick alignment during installation and provide a stable connection that accommodates frame movement during vehicle operation.

Optionally in some examples, including in at least one preferred example, a cross-sectional dimension of the elongated portion is smaller than a cross-sectional dimension of the aperture, thereby allowing relative movement between the battery bracket and the cross-member. A technical benefit may include that a clearance can be provided between the elongated portion and the corresponding aperture, which may reduce the transfer of stresses caused by frame twisting or deformation. An improved durability of the battery installation may hereby be provided.

Optionally in some examples, including in at least one preferred example, the battery suspension arrangement further comprises a bar element extending between and connected to the pair of battery brackets. A technical benefit may include that a structural reinforcement can be provided to the pair of battery brackets, which may improve stability. The bar element may also help maintain bracket alignment under dynamic loads.

Optionally in some examples, including in at least one preferred example, the battery suspension arrangement further comprises a pair of elastic damper elements arranged between the bar element and a respective one of the pair of battery brackets. A technical benefit may include that elastic damper elements positioned between the bar element and the battery brackets can limit upward displacement of the second traction battery module relative to the cross-member. The damper elements may also reduce transmission of vibrations or shocks to the second traction battery module during vehicle operation.

Optionally in some examples, including in at least one preferred example, the battery suspension arrangement further comprises a diagonal support element configured to be connected between the frame bracket and the longitudinal vehicle frame member. A technical benefit may include that a diagonal support element connected between the frame bracket and the vehicle frame member can improve the structural rigidity of the battery suspension arrangement. The support element may contribute to improved crash performance by reinforcing the frame bracket against longitudinal impact loads or frame deformation.

Optionally in some examples, including in at least one preferred example, the battery suspension arrangement further comprises a second pair of battery brackets connectable to the first traction battery module, the second pair of battery brackets being suspended from the frame bracket. A technical benefit may include that a second pair of battery brackets suspended from the frame bracket can provide a dedicated support structure for the first traction battery module. The second pair of battery brackets may enable installation and removal of the outboard battery module, i.e. the first traction battery module, without requiring disassembly of surrounding structural components.

Optionally in some examples, including in at least one preferred example, each bracket of the second pair of brackets comprises an elongated portion, and the frame bracket comprises a pair of apertures, the elongated portions being positioned within corresponding apertures of the frame bracket. A technical benefit may include that a simple mechanical interface between the battery brackets and the frame bracket can be provided by positioning elongated portions of the brackets within corresponding apertures in the frame bracket. The engagement between the elongated portions and the corresponding apertures may support quick alignment during installation and provide a stable connection that accommodates frame movement during vehicle operation.

Optionally in some examples, including in at least one preferred example, a cross-sectional dimension of the elongated portion is smaller than a cross-sectional dimension of the aperture, thereby allowing relative movement between the second battery bracket and the frame bracket. A technical benefit may include that a clearance can be provided between the elongated portion and the corresponding aperture, which may reduce the transfer of stresses caused by frame twisting or deformation. An improved durability of the battery installation may hereby be provided.

Optionally in some examples, including in at least one preferred example, the battery suspension arrangement further comprises a second bar element extending between and connected to the second pair of battery brackets. A technical benefit may include that a structural reinforcement can be provided to the second pair of battery brackets, which may improve stability. The bar element may also help maintain bracket alignment under dynamic loads.

Optionally in some examples, including in at least one preferred example, the battery suspension arrangement further comprises a second pair of elastic damper elements arranged between the second bar element and a respective one of the second pair of battery brackets. A technical benefit may include that elastic damper elements positioned between the bar element and the battery brackets can limit upward displacement of the first traction battery module relative to the frame bracket. The damper elements may also reduce transmission of vibrations or shocks to the first traction battery module during vehicle operation.

According to a second aspect, there is provided a vehicle comprising the battery suspension arrangement of any of the examples described above in relation to the first aspect. A technical benefit may include that integration of the battery suspension arrangement into a vehicle can enable compact and modular packaging of multiple traction battery modules within the chassis structure. The arrangement may contribute to increased installed energy capacity while supporting improved manufacturability, serviceability, and structural compliance under dynamic loading conditions.

Optionally in some examples, including in at least one preferred example, the vehicle further comprises a first traction battery module suspended from the frame bracket, and a second traction battery module suspended from the cross-member. A technical benefit may include that a vehicle comprising both a first traction battery module suspended from the frame bracket and a second traction battery module suspended from the cross-member can achieve an efficient arrangement of energy storage components within the available chassis space. This configuration may support optimized weight distribution, increased installed battery volume, and improved packaging flexibility within the vehicle chassis.

Further effects and features of the second aspect are largely analogous to those described above in relation to the first aspect.

According to a third aspect, there is provided a method of assembling a traction battery assembly to a longitudinal vehicle frame member of a vehicle, the method comprising: attaching a laterally extending frame bracket to the vehicle frame member, attaching an intermediate bracket to a cross-member, connecting the cross-member to a traction battery module, and suspending the cross-member from the vehicle frame member by attaching the intermediate bracket to the frame bracket. The third aspect of the disclosure may seek to address the challenge of assembling a traction battery module in a constrained vehicle chassis environment while maintaining ergonomic access, structural efficiency, and installation repeatability. In particular, conventional under-frame battery installations often require direct attachment to the vehicle frame, which can introduce complexity in alignment and fastener access during production or service operations. A technical benefit may include that a modular assembly approach can be provided by preassembling the cross-member and traction battery module prior to installation on the vehicle. The use of an intermediate bracket to suspend the cross-member from the frame bracket may reduce the number of direct interfaces with the vehicle frame, improving assembly accessibility and flexibility. A further technical benefit may include that the method supports ergonomic fastener access from the side or below, depending on the assembly environment, which can reduce production time and improve maintainability.

Optionally in some examples, including in at least one preferred example, the traction battery module is a second traction battery module, the method further comprising: connecting a first traction battery module to the frame bracket. A technical benefit may include that connecting the first traction battery module to the frame bracket can enable independent installation of the traction battery modules, allowing for modular assembly processes. The separation of mounting operations may support flexible production workflows and simplify service procedures by enabling access to one battery module without requiring removal of the other.

Further effects and features of the third aspect are largely analogous to those described above in relation to the first and second aspects.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary vehicle according to an example.
Fig. 2 is a perspective view of an exemplary battery suspension arrangement mounted to a frame of the vehicle according to an example.
Fig. 3 is a front view of the exemplary battery suspension arrangement according to an example.
Fig. 4 is a detailed illustration of parts of the exemplified battery suspension arrangement according to an example.
Figs. 5A - 5B are detailed illustrations of components forming part of the battery suspension arrangement according to an example.
Fig. 6 is an exemplary flow chart of a method of assembling a traction battery assembly to a longitudinal vehicle frame member according to an example.

### DETAILED DESCRIPTION

The detailed description set forth below provides information and examples of the disclosed technology with sufficient detail to enable those skilled in the art to practice the disclosure.

The disclosure described in the following aims at addressing the challenges of efficiently integrating multiple traction battery modules into a heavy-duty vehicle chassis, while maintaining efficient manufacturability, serviceability, durability, and safety. A technical benefit may include enabling the suspension of a second traction battery module under the vehicle frame via a bracket that is structurally connected to the frame bracket suspending the first traction battery module outside the frame, thereby reducing the number of direct interfaces with the vehicle frame.

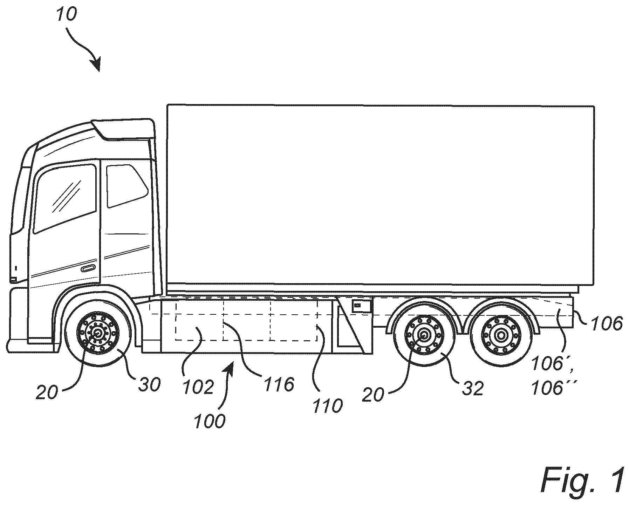

With reference to Fig. 1 which is an exemplary illustration of a vehicle 10 according to an example. The exemplified vehicle 10 is configured to be at least partly propelled by one or more electric traction motors 20. In Fig. 1, the electric traction motors 20 are exemplified as wheel hub motors connected to the pair of front wheels 30 as well as to the foremost pair of rear wheels 32. However, the vehicle 10 may alternatively comprise a single electric traction motor connected to the wheels via a conventional propulsion shaft (not shown). The at least one electric traction motor 20 is configured to apply propulsive power to the wheels of the vehicle during propulsion, and to generate electric power during braking.

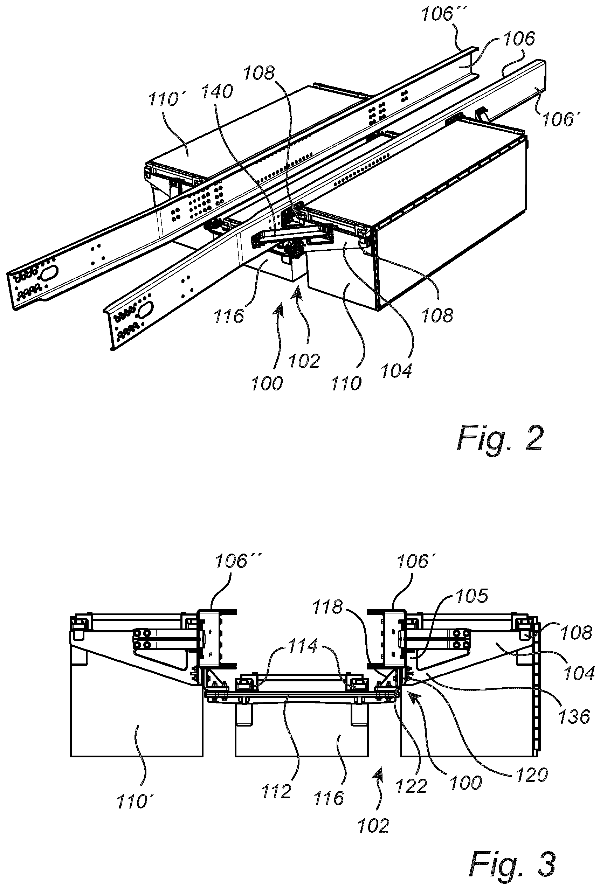

The vehicle further comprises a battery suspension arrangement 100. The battery suspension arrangement 100 suspends a traction battery assembly 102 from a longitudinal vehicle frame member 106 of the vehicle 10. The traction battery assembly 102 comprises at least a first 110 and a second 116 traction battery module configured to feed electric power to the electric traction motor 20 during propulsion of the vehicle 10 and to receive electric power during braking. The traction battery modules are thus suspended from a pair of longitudinally extending frame members 106', 106'' of the vehicle 10 by means of the battery suspension arrangement 100. The pair of longitudinally extending frame members 106', 106'', which are illustrated in further detail in e.g. Fig. 2 preferably extends in the longitudinal direction of the vehicle 10. In order to describe the battery suspension arrangement 100 in further detail, reference is now made to Figs. 2 and 3.

Turning to Figs. 2 and 3, where Fig. 2 is a perspective view of an exemplary battery suspension arrangement 100 mounted to a frame 106 of the vehicle according to an example, and Fig. 3 is a front view of the exemplary battery suspension arrangement 100 according to an example. Accordingly, and as indicated above, the battery suspension arrangement 100 is mounted to a vehicle frame structure and configured to support a traction battery assembly 102 comprising a plurality of traction battery modules. The vehicle frame structure comprises a pair of longitudinal vehicle frame members 106', 106".

The battery suspension arrangement 100 comprises laterally extending frame bracket 104. The laterally extending frame bracket 104 is mounted to one of the frame members 106. The frame bracket 104 comprises a first traction battery interface 108 to which a first traction battery module 110 is connected. As can be seen in Fig. 2 and 3, the first traction battery module 110 is positioned laterally outside the adjacent frame member 106 by being suspended from the frame bracket 104.

The battery suspension arrangement 100 further comprises a laterally extending cross-member 112 as well as an intermediate bracket 118. The laterally extending cross-member 112 is suspended from the above described frame bracket 104 via the intermediate bracket 118. The intermediate bracket 118 comprises a first portion 120 (illustrated in further detail in Fig. 3) connected to the frame bracket 104 and a second portion 122 (illustrated in further detail in Fig. 3) connected to the cross-member 112. The cross-member 112 further comprises a second traction battery interface 114, to which a second traction battery module 116 is connected. As can be seen in Figs. 2 and 3, the second traction battery module 116 is positioned laterally inside the frame member 106, i.e., underneath the frame in a central region of the chassis.

Furthermore, and as shown particularly in Fig. 3, the exemplified frame bracket 104 is formed as a triangularly shaped structure comprising a vertical member 105. The first portion 120 of the intermediate bracket 118 is connected to a lower portion 136 of the vertical member 105, allowing the cross-member 112 to be suspended at a vertical position lower than the outboard battery mounting points. This enables the second traction battery module 116 to be mounted lower than the first traction battery module 110.

To reinforce the frame bracket 104 and improve structural rigidity, a diagonal support element 140 is connected between the frame bracket 104 and the vehicle frame member 106. The diagonal support element 140 may be configured to absorb crash loads or resist frame deformation during dynamic operation.

Still further, in addition to the first 110 and second 116 traction battery modules described above, a third traction battery module 110' is illustrated in Figs. 2 and 3. The third traction battery module 110' is arranged on an opposite side of the second traction battery module 116 relative to the position of the first traction battery module 110. The third traction battery module 110' is suspended from the opposing longitudinal vehicle frame member 106" in the same manner as the first traction battery module 110, using a corresponding frame bracket 104 and first traction battery interface 108. This symmetric arrangement may enable balanced distribution of battery mass across the vehicle width.

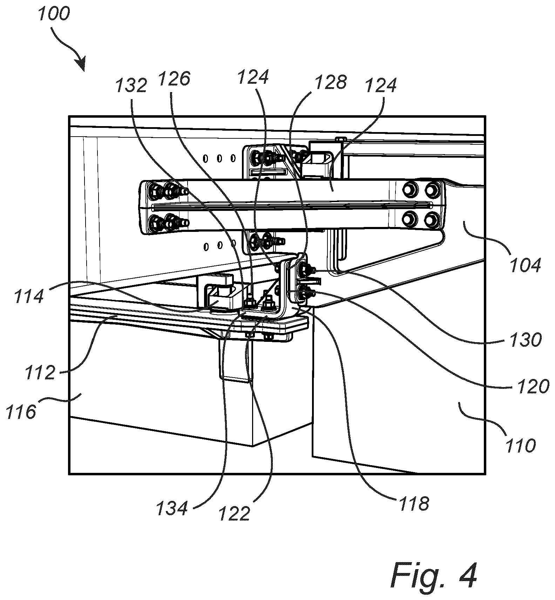

Reference is now made to Fig. 4 which is a detailed illustration of parts of the exemplified battery suspension arrangement 100 according to an example. In particular, Fig. 4 is a detailed perspective view of the intermediate bracket 118 and its interface with the surrounding structural components of the battery suspension arrangement 100. As illustrated, the intermediate bracket 118 is connected between the frame bracket 104 and the cross-member 112 and is configured to structurally suspend the cross-member 112 from the frame bracket 104.

The intermediate bracket 118 comprises a first portion 120 forming a frame bracket interface 124, and a second portion 122 forming a cross-member interface 126. In detail, the frame bracket interface 124 connects the intermediate bracket 118 to the frame bracket 104, while the cross-member interface 126 connects the intermediate bracket 118 to the cross-member 112. The intermediate bracket 118 is generally L-shaped, with the first portion 120 extending in a substantially vertical direction and the second portion 122 extending substantially laterally towards the cross-member 112. The L-shaped form enables the intermediate bracket 118 to bridge vertically between the frame bracket 104 and the cross-member 112.

Furthermore, the frame bracket interface 124 of the intermediate bracket 118 comprises at least one laterally extending through hole 128 through which a first fastener element 130 extends to secure the intermediate bracket 118 to the frame bracket 104. The lateral orientation of the through hole 128 enables side access to the fastener element 130. The at least one fastener element 130 may be a screw or bolt.

The cross-member interface 126 of the intermediate bracket 118 is positioned at the laterally extending second portion 122. The cross-member interface 126 comprises at least one vertically extending through hole 132 configured to receive a second fastener element 134. The second fastener element 134 secures the cross-member 112 to the intermediate bracket 118 from a vertical access direction. The at least one second fastener element 134 may be a screw or bolt. Accordingly, the intermediate bracket 118 may establish a dual-interface structural link between the frame bracket 104 and the cross-member 112, providing a suspended mounting structure in which the under-frame traction battery module 116 is indirectly mounted to the vehicle frame via the intermediate bracket.

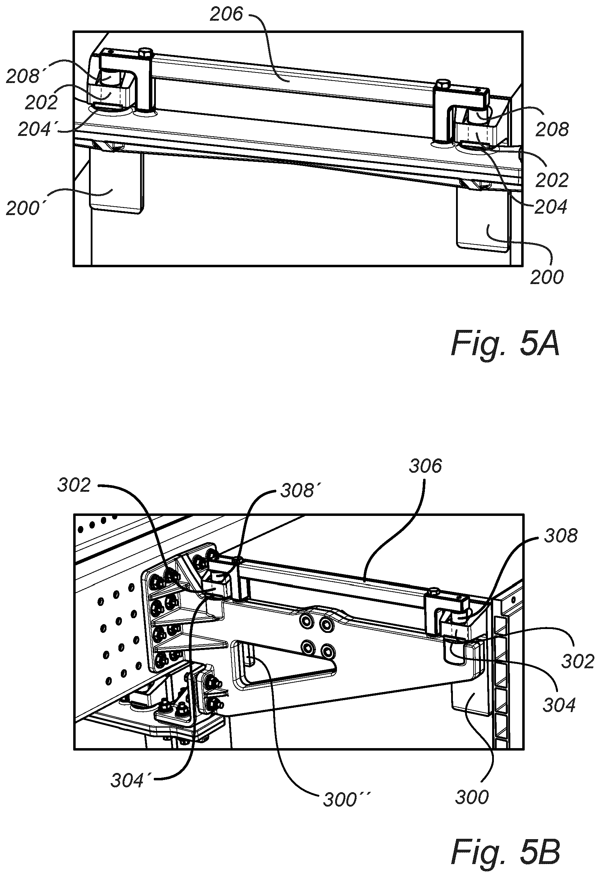

Reference is now made to Fig. 5A which is a detailed perspective view of a portion of the above described battery suspension arrangement 100 according to an example. As depicted in Fig. 5A, the battery suspension arrangement 100 comprises a pair of battery brackets 200, 200'. Fig. 5A illustrates the interface between the pair of battery brackets 200, 200' and the cross-member 112, as well as additional structural components configured to secure and stabilize a second traction battery module 116 positioned beneath the vehicle frame.

As shown in Fig. 5A, each of the battery brackets 200, 200' is configured to be connected to the second traction battery module 116 and is suspended from the cross-member 112. The suspension may be achieved by means of a respective elongated portion 202 extending from each of the battery brackets 200, 200'. The elongated portion 202 is inserted into a corresponding aperture 204, 204' formed in the cross-member 112. The apertures 204, 204' are aligned to receive the elongated portions 202 in a generally vertical or upward-facing orientation forming a mechanical peg-and-hole interface between the pair of battery brackets and the intermediate bracket.

Further, a cross-sectional dimension of each elongated portion 202 is preferably smaller than the cross-sectional dimension of the corresponding aperture 204, 204' for allowing a clearance fit. The clearance permits limited relative movement between the battery brackets 200, 200' and the cross-member 112 during vehicle operation, such as when the frame experiences torsion or dynamic loads.

Furthermore, the exemplified battery suspension arrangement 100 comprises a bar element 206. The bar element 206 extends between and is connected to the pair of battery brackets 200, 200'. Still further, a pair of elastic damper elements 208, 208' is arranged between the bar element 206 and a respective one of the pair of battery brackets 200, 200'. The damper elements 208, 208' may limit upward displacement of the battery bracket and attached battery module relative to the cross-member 112 and may further absorb shocks and vibrations during vehicle operation.

Reference is now made to Fig. 5B, which is a detailed perspective view of a portion of the above-described battery suspension arrangement 100 according to an example. Fig. 5B illustrates a second pair of battery brackets 300, 300' configured to support a first traction battery module 110, and their interface with the frame bracket 104. The second pair of battery brackets 300, 300' is suspended from the frame bracket 104 and arranged to connect to the first traction battery module 110 positioned laterally outside the vehicle frame.

As shown in Fig. 5B, each of the battery brackets 300, 300' comprises a respective elongated portion 302. The elongated portions 302 are inserted into corresponding apertures 304, 304' formed in the frame bracket 104. The apertures 304, 304' are aligned to receive the elongated portions 302 in a generally vertical orientation, forming a mechanical peg-and-hole interface between the second pair of battery brackets and the frame bracket.

A cross-sectional dimension of each elongated portion 302 is preferably smaller than the cross-sectional dimension of the corresponding aperture 304, 304', thereby providing a clearance fit. This clearance allows for limited relative movement between the second pair of battery brackets 300, 300' and the frame bracket 104, for example in response to frame twisting or vibrational loads experienced during vehicle operation.

As is further illustrated in Fig. 5B, the battery suspension arrangement comprises a second bar element 306. The second bar element 306 extends between and is connected to the second pair of battery brackets 300, 300'. Still further, a second pair of elastic damper elements 308, 308' is arranged between the second bar element 306 and a respective one of the battery brackets 300, 300' of the second pair of battery brackets. The damper elements 308, 308' may limit upward displacement of the first battery bracket and attached first battery module relative to the frame bracket 104 and may further absorb shocks and vibrations during vehicle operation.

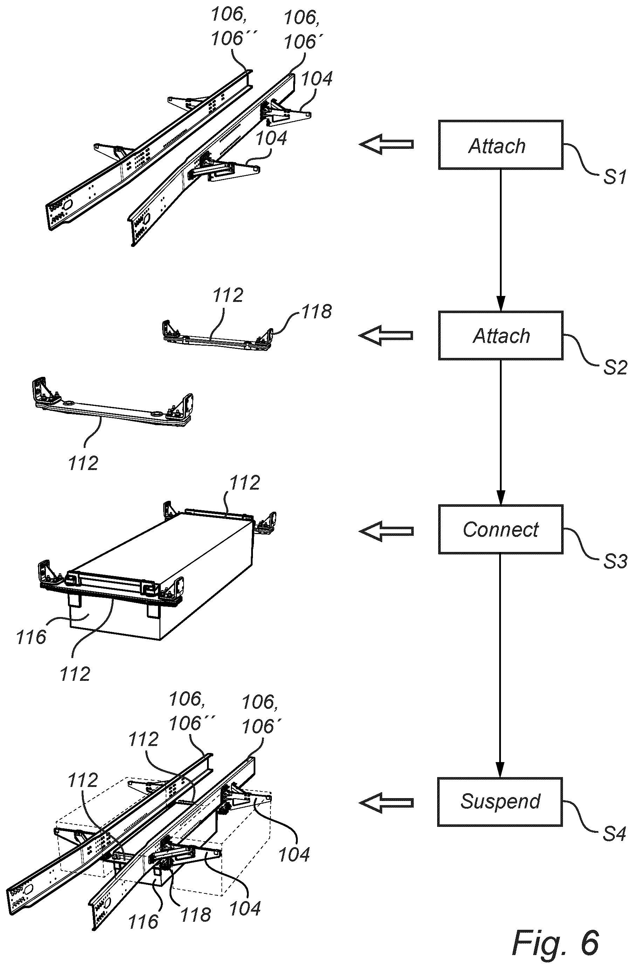

Reference is now made to Fig. 6, which is a schematic illustration of an exemplary method of assembling a traction battery assembly to a longitudinal vehicle frame member according to an example. The method is based on the battery suspension arrangement 100 described above and comprises a sequence of operations, each representing a stage in the installation of a traction battery module 116 beneath the vehicle frame.

During assembly, the laterally extending frame bracket 104 is attached S1 to the longitudinal vehicle frame member 106. The frame bracket 104 may be secured using mechanical fasteners such as bolts and is configured to provide a first traction battery interface, as previously described.

The intermediate bracket 118 is attached S2 to the cross-member 112. The intermediate bracket 118 may be secured to the cross-member 112 using one or more fasteners inserted through vertically extending through holes, as described above in connection with Fig. 4. Subsequent to attaching the intermediate bracket 118 to the cross-member 112, the cross-member 112 is connected S3 to the traction battery module 116. The connection may involve securing a pair of battery brackets to the battery module and inserting elongated portions of the brackets into corresponding apertures of the cross-member, as described above in relation to Fig. 5A.

The cross-member 112 is subsequently suspended S4 from the vehicle frame member 106 by attaching the intermediate bracket 118 to the frame bracket 104. The attachment may be achieved via lateral fasteners extending through the above described frame bracket interface of the intermediate bracket.

In addition, the first traction battery module 110 may be connected to the frame bracket 104 such as to also suspend the first traction battery module 110 from the vehicle frame member 106.

### EXAMPLE LIST

Example 1. A battery suspension arrangement for a traction battery assembly of a vehicle, the battery suspension arrangement comprising: a laterally extending frame bracket configured to be mounted to a longitudinal vehicle frame member, the frame bracket comprising a first traction battery interface for suspending a first traction battery module positioned laterally outside the frame member, a laterally extending cross-member comprising a second traction battery interface for suspending a second traction battery module positioned laterally inside the frame member, and an intermediate bracket comprising a first portion connected to the frame bracket, and a second portion connected to the cross-member, wherein the cross-member is suspended from the frame bracket via the intermediate bracket.

Example 2. The battery suspension arrangement of example 1, wherein the intermediate bracket comprises a frame bracket interface configured to be attached to the frame bracket, and a cross-member interface configured to be attached to the cross-member.

Example 3. The battery suspension arrangement of example 2, wherein the frame bracket interface comprises at least one laterally extending through hole through which a first fastener element is configured to secure the intermediate bracket to the frame bracket.

Example 4. The battery suspension arrangement of examples 2 or 3, wherein the cross-member interface comprises at least one vertically extending through hole through which a second fastener element is configured to secure the intermediate bracket to the cross-member.

Example 5. The battery suspension arrangement of any one of the preceding examples, wherein the frame bracket is a triangularly shaped frame bracket, the first portion of the intermediate bracket being connected to a lower portion of a vertical member of the triangularly shaped frame bracket.

Example 6. The battery suspension arrangement of any one of the preceding examples, further comprising a pair of battery brackets connectable to the second traction battery module, the pair of battery brackets being suspended from the cross-member.

Example 7. The battery suspension arrangement of example 6, wherein each bracket of the pair of brackets comprises an elongated portion, and the cross-member comprises a pair of apertures, the elongated portions being positioned within corresponding apertures of the cross-member.

Example 8. The battery suspension arrangement of example 7, wherein a cross-sectional dimension of the elongated portion is smaller than a cross-sectional dimension of the aperture, thereby allowing relative movement between the battery bracket and the cross-member.

Example 9. The battery suspension arrangement of any one of examples 6 - 8, further comprising a bar element extending between and connected to the pair of battery brackets.

Example 10. The battery suspension arrangement of example 9, further comprising a pair of elastic damper elements arranged between the bar element and a respective one of the pair of battery brackets.

Example 11. The battery suspension arrangement of any one of the preceding examples, further comprising a diagonal support element configured to be connected between the frame bracket and the longitudinal vehicle frame member.

Example 12. The battery suspension arrangement of any one of the preceding examples, further comprising a second pair of battery brackets connectable to the first traction battery module, the second pair of battery brackets being suspended from the frame bracket.

Example 13. The battery suspension arrangement of example 12, wherein each bracket of the second pair of brackets comprises an elongated portion, and the frame bracket comprises a pair of apertures, the elongated portions being positioned within corresponding apertures of the frame bracket.

Example 14. The battery suspension arrangement of example 13, wherein a cross-sectional dimension of the elongated portion is smaller than a cross-sectional dimension of the aperture, thereby allowing relative movement between the second battery bracket and the frame bracket.

Example 15. The battery suspension arrangement of any one of examples 12 - 14, further comprising a second bar element extending between and connected to the second pair of battery brackets.

Example 16. The battery suspension arrangement of example 15, further comprising a second pair of elastic damper elements arranged between the second bar element and a respective one of the second pair of battery brackets.

Example 17. A vehicle comprising the battery suspension arrangement of any of examples 1 - 16.

Example 18. The vehicle according to example 17, further comprising a first traction battery module suspended from the frame bracket, and a second traction battery module suspended from the cross-member.

Example 19. A method of assembling a traction battery assembly to a longitudinal vehicle frame member of a vehicle, the method comprising: attaching a laterally extending frame bracket to the vehicle frame member, attaching an intermediate bracket to a cross-member, connecting the cross-member to a traction battery module, and suspending the cross-member from the vehicle frame member by attaching the intermediate bracket to the frame bracket.

Example 20. The method of example 19, wherein the traction battery module is a second traction battery module, the method further comprising: connecting a first traction battery module to the frame bracket.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery suspension arrangement (100) for a traction battery assembly (102) of a vehicle, the battery suspension arrangement comprising:
- a laterally extending frame bracket (104) configured to be mounted to a longitudinal vehicle frame member (106), the frame bracket comprising a first traction battery interface (108) for suspending a first traction battery module (110) positioned laterally outside the frame member,
- a laterally extending cross-member (112) comprising a second traction battery interface (114) for suspending a second traction battery module (116) positioned laterally inside the frame member, and
- an intermediate bracket (118) comprising a first portion (120) connected to the frame bracket (104), and a second portion (122) connected to the cross-member (112), wherein the cross-member is suspended from the frame bracket via the intermediate bracket.

2. The battery suspension arrangement (100) of claim 1, wherein the intermediate bracket comprises a frame bracket interface (124) configured to be attached to the frame bracket, and a cross-member interface (126) configured to be attached to the cross-member.

3. The battery suspension arrangement (100) of claim 2, wherein the frame bracket interface comprises at least one laterally extending through hole (128) through which a first fastener element (130) is configured to secure the intermediate bracket to the frame bracket.

4. The battery suspension arrangement (100) of claims 2 or 3, wherein the cross-member interface comprises at least one vertically extending through hole (132) through which a second fastener element (134) is configured to secure the intermediate bracket to the cross-member.

5. The battery suspension arrangement (100) of any one of the preceding claims, wherein the frame bracket is a triangularly shaped frame bracket, the first portion of the intermediate bracket being connected to a lower portion (136) of a vertical member of the triangularly shaped frame bracket.

6. The battery suspension arrangement (100) of any one of the preceding claims, further comprising a pair of battery brackets (200, 200') connectable to the second traction battery module, the pair of battery brackets being suspended from the cross-member.

7. The battery suspension arrangement (100) of claim 6, wherein each bracket of the pair of battery brackets (200, 200') comprises an elongated portion (202), and the cross-member comprises a pair of apertures (204, 204'), the elongated portions being positioned within corresponding apertures of the cross-member.

8. The battery suspension arrangement (100) of claim 7, wherein a cross-sectional dimension of the elongated portion is smaller than a cross-sectional dimension of the aperture, thereby allowing relative movement between the battery bracket and the cross-member.

9. The battery suspension arrangement (100) of any one of claims 6 - 8, further comprising a bar element (206) extending between and connected to the pair of battery brackets.

10. The battery suspension arrangement (100) of claim 9, further comprising a pair of elastic damper elements (208, 208') arranged between the bar element and a respective one of the pair of battery brackets.

11. The battery suspension arrangement (100) of any one of the preceding claims, further comprising a diagonal support element (140) configured to be connected between the frame bracket and the longitudinal vehicle frame member.

12. The battery suspension arrangement (100) of any one of the preceding claims, further comprising a second pair of battery brackets (300, 300') connectable to the first traction battery module, the second pair of battery brackets being suspended from the frame bracket.

13. The battery suspension arrangement (100) of claim 12, wherein each bracket of the second pair of battery brackets (300, 300') comprises an elongated portion (302), and the frame bracket comprises a pair of apertures (304, 304'), the elongated portions being positioned within corresponding apertures of the frame bracket.

14. A vehicle (10) comprising the battery suspension arrangement (100) of any of claims 1 - 13.

15. A method of assembling a traction battery assembly to a longitudinal vehicle frame member of a vehicle, the method comprising:
- attaching (S1) a laterally extending frame bracket (104) to the vehicle frame member (106),
- attaching (S2) an intermediate bracket (118) to a cross-member (112),
- connecting (S3) the cross-member (112) to a traction battery module (116), and
- suspending (S4) the cross-member (112) from the vehicle frame member (106) by attaching the intermediate bracket (118) to the frame bracket (104).
